Europäisches Patentamt

European Patent Office

Office européen des brevets

(11) Veröffentlichungsnummer: **0 306 911 B1**

(12) # EUROPÄISCHE PATENTSCHRIFT

(45) Veröffentlichungstag der Patentschrift: **15.01.92**

(51) Int. Cl.⁵: **B60H 1/00**

(21) Anmeldenummer: **88114585.8**

(22) Anmeldetag: **07.09.88**

(54) **Wärmeträgerkreislauf für eine Fahrzeugheizung mit einem motorunabhängigen Heizgerät.**

(30) Priorität: **11.09.87 DE 3730598**

(43) Veröffentlichungstag der Anmeldung:
**15.03.89 Patentblatt 89/11**

(45) Bekanntmachung des Hinweises auf die
Patenterteilung:
**15.01.92 Patentblatt 92/03**

(84) Benannte Vertragsstaaten:
**DE ES FR IT SE**

(56) Entgegenhaltungen:
**DE-A- 2 120 073**
**DE-A- 3 447 182**
**FR-A- 2 263 903**

**PATENT ABSTRACTS OF JAPAN, Band 11,**
**Nr. 54 (M-563)[2501], 19. Februar 1987; & JP-**
**A-61 215 115 (NISSAN SHATAI CO., LTD)**
**24-09-1986**

(73) Patentinhaber: **Firma J. Eberspächer**
**Eberspächer Strasse 24**
**W-7300 Esslingen(DE)**

(72) Erfinder: **Hintennach, Hans, Dipl.-Ing. (FH)**
**Haldenstrasse 2**
**W-7066 Baltmannsweiler(DE)**
Erfinder: **Schmalenbach, Dietrich, Dipl.-Ing.**
**Schwarzwaldstrasse 6**
**W-7066 Baltmannsweiler(DE)**

EP 0 306 911 B1

**Beschreibung**

Die Erfindung bezieht sich auf einen Wärmeträgerkreislauf für eine Fahrzeugheizung mit einem motorunabhängigen Heizgerät mit:

a) einem Vorlauf, der von einem Antriebs-Verbrennungsmotor des Fahrzeuges zu einem Heizungswärmetauscher für den Fahrzeuginnenraum führt und einen Parallelast (20) aufweist, in dem das Heizgerät angeordnet ist,

b) einem Rücklauf, der von dem Heizungswärmetauscher zu dem Verbrennungsmotor führt,

c) einer Verbindungsleitung, die von dem Rücklauf zu einer Stelle des Vorlaufs vor dem Heizgerät führt und

d) einem temperaturabhängigen Ventil, das den Wärmeträgerfluß durch die Verbindungsleitung und durch den Verbrennungsmotor steuert.

Bei bisherigen Wärmeträgerkreisläufen dieser Art durchströmt der Wärmeträger, von dem Heizgerät kommend, insgesamt nacheinander den Heizungswärmetauscher und den Verbrennungsmotor, so daß der Heizungswärmetauscher und der Verbrennungsmotor auf im wesentlichen gleiche Temperatur aufgeheizt werden.

Nach der FR-A2-2 263 903 ist ein Wärmeträgerkreislauf für eine Fahrzeugheizung mit einem motorunabhängigen Heizgerät bekannt, mit einem Teilkreislauf, der aus einem Heizgerät und einem der Aufheizung des Fahrzeuginnenraumes dienenden Wärmetauscher diesem Wärmetauscher und ferner einem ersten Abschnitt eines Rücklaufes und einer zu dem Heizgerät zurückführenden Verbindungsleitung gebildet ist und als temperaturabhängiges Ventil ein Thermostatventil aufweist, das auf die Wärmeträgertemperatur in diesem Teilkreislauf anspricht. Dabei wird, sobald in diesem Teilkreislauf eine Solltemperatur des Wärmeträgers erreicht wird, von diesem Teilkreislauf auf den Vollkreislauf, der den Verbrennungsmotor einschließt, umgeschaltet. Diese Druckschrift basiert auf dem Grundgedanken, das durch das Heizgerät erzeugte Wärmeangebot in erster Linie der Erwärmung des Fahrzeuginnenraumes zugute kommen zu lassen. Erst wenn für die Wärmeabgabe an den Fahrzeuginnenraum vernünftige Bedingungen herrschen, wird auf zusätzliche Erwärmung des Verbrennungsmotors umgeschaltet, wobei die Wärmeträgertemperatur in dem aufgezeigten Teilkreislauf das Umschaltkriterium darstellt.

Der Erfindung liegt die Aufgabe zugrunde, einen Wärmeträgerkreislauf zu schaffen, der stets eine Grunderwärmung des Verbrennungsmotors sicherstellt, aber das hierüber hinausgehende, von dem Heizgerät erzeugte Wärmeangebot auf die Erwärmung des Fahrzeuginnenraumes konzentriert.

Zur Losung dieser Aufgabe ist der Wärmeträgerkreislauf erfindungsgemäß dadurch gekennzeichnet, daß das Ventil durch die Temperatur des Wärmeträgers im Bereich des Verbrennungsmotors gesteuert ist.

Der erfindungsgemäße Wärmeträgerkreislauf weist somit einen Teilkreislauf auf, der teilweise oder vollständig den Parallelast mit dem Heizgerät, einen anschließenden Teil des Vorlaufs, den Heizungswärmetauscher, einen Teil des Rücklaufs und die Verbindungsleitung umfaßt. Das Ventil kann in eine erste Stellung gebracht werden, so daß der Wärmeträger praktisch ausschließlich in diesem Teilkreislauf zirkuliert, so daß das Wärmeangebot des Wärmeträgers vollständig auf den Heizungswärmetauscher konzentriert ist. Das Ventil kann aber auch in eine zweite Stellung gebracht werden, so daß kein Wärmeträger durch die Verbindungsleitung strömt und somit der vom Heizungswärmetauscher kommende Wärmeträger den Verbrennungsmotor durchströmt, ehe er wieder zum Heizgerät kommt. Schließlich kann das Ventil in Zwischenstellungen gebracht werden, so daß der vom Heizungswärmetauscher kommende Wärmeträgerfluß in beliebigen Anteilen auf eine direkte Zurückströmung zum Heizgerät und auf eine Zurückströmung durch den Verbrennungsmotor zum Heizgerät aufgeteilt wird. Bei der zuletzt genannten Möglichkeit ist eine Zwischenstellung besonders günstig und bevorzugt, bei der nur ein derartiger Anteil des Wärmeträgerflusses durch den Verbrennungsmotor geführt wird, daß dieser auf einen Temperaturbereich von 10 bis 30 ˚C, vorzugsweise 15 bis 25 ˚C, gebracht bzw. gehalten wird. In diesem Fall wird also nur eine so große Strömungsmenge des Wärmeträgers zur Erwärmung des Verbrennungsmotors abgezweigt, wie erforderlich ist, um diesem gute Startfähigkeit zu sichern; im übrigen wird das Wärmeangebot des Wärmeträgers auf den Heizungswärmetauscher und damit den Fahrzeuginnenraum konzentriert.

Der Wärmeträger ist eine Flüssigkeit, in der Regel Wasser oder ein Wasser-Frostschutzmittel-Gemisch. Der Begriff "Fahrzeug" ist umfassend zu verstehen und soll nicht nur Landfahrzeuge, wie Personenkraftwagen, Lastkraftwagen, Omnibusse, Campingfahrzeuge und dergleichen umfassen, sondern insbesondere auch Wasserfahrzeuge, wie Motorboote. Der Begriff "Parallelast" ist funktionell und nicht geometrisch zu verstehen; es existiert im Vorlauf des Wärmeträgerkreislaufs eine Verzweigung auf zwei Äste, die weiter hinten wieder zusammenführen. In einem dieser Äste ist das Heizgerät angeordnet.

Bevorzugte Ausgestaltungen der Erfindung sind in den abhängigen Ansprüchen angegeben und werden nachfolgend noch genauer erläutert.

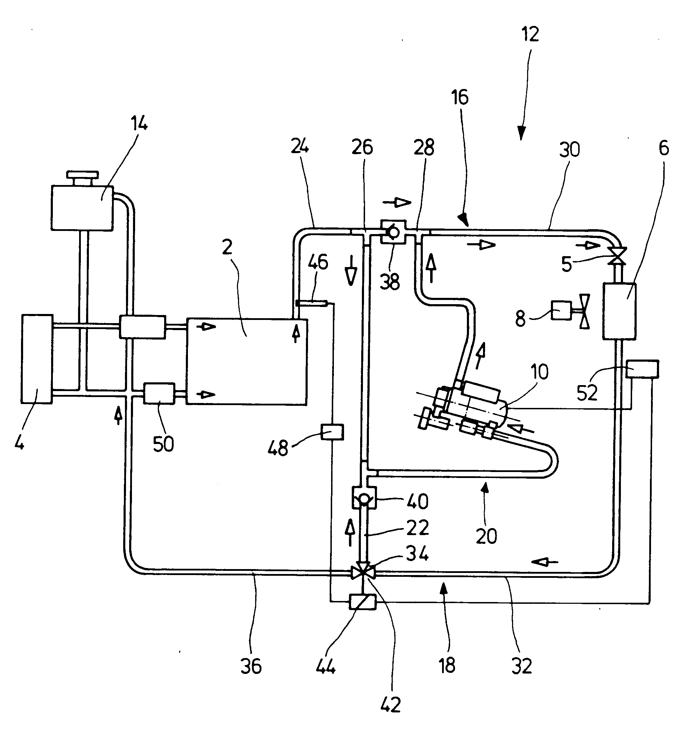

Die Erfindung und Ausgestaltungen der Erfindung werden im folgenden anhand eines schematisch zeichnerisch dargestellten Ausführungsbeispiels noch näher erläutert. Die einzige Zeichnungsfigur zeigt einen Wärmeträgerkreislauf, bei dem einige Bestandteile nur schematisch eingezeichnet sind.

Man erkennt in der Zeichnung einen Verbrennungsmotor 2 mit konventionell zugeordnetem Kühler 4, einen Heizungswärmetauscher 6, der üblicherweise im Bereich unterhalb der Frontscheibe des Fahrzeugs angeordnet ist und von außen in den Fahrzeuginnenraum transportierte Luft oder im Fahrzeuginnenraum umgewälzte Luft erwärmt, ein dem Heizungswärmetauscher 6 zugeordnetes Gebläse 8 und ein motorunabhängiges Heizgerät 10. Das Heizgerät 10 kann durch Verbrennung von Brennstoff, insbesondere Benzin oder Dieselöl, Wärme erzeugen und über einen eingebauten Wärmetauscher an einen Wärmeträgerkreislauf abgeben.

Der Wärmeträgekreislauf 12 besteht, abgesehen von den zu dem Kühler und einem Ausdehnungsgefäß 14 führenden Leitungen, im wesentlichen aus einem Vorlauf 16, der von dem Verbrennungsmotor 2 zu dem Heizungswärmetauscher 6 führt, einem Rücklauf 18, der von dem Heizungswärmetauscher 6 zurück zu dem Verbrennungsmotor 2 führt, einem dem Vorlauf 16 angehörenden Parallelast 20, in dem das Heizgerät 10 liegt, und einer Verbindungsleitung 22. Der Vorlauf 16 besteht im wesentlichen aus einem ersten Teil 24 von dem Verbrennungsmotor 2 bis zu einer Abzweigungsstelle 26 des Parallelasts 20, einem daran anschließenden zweiten Teil 28 bis zur Wiedereinmündung des Parallelasts 20, und einem daran anschließenden dritten Teil 30 bis zum Heizungswärmetauscher 6. Der Rücklauf 18 besteht im wesentlichen aus einem ersten Teil 32 von dem Heizungswärmetauscher 6 bis zu einer Abzweigungsstelle 34 der Verbindungsleitung 22, und einem anschließenden zweiten Teil 36 bis zum Verbrennungsmotor 2. Die Verbindungsleitung 22 führt zu einer Stelle des Parallelasts 20, die in Durchströmungsrichtung vor dem Heizgerät 10 liegt. Die Verbindungsleitung 22 könnte aber auch zu dem ersten Teil 24 des Vorlaufs 16 führen.

Im zweiten Teil 28 des Vorlaufs 16 ist ein Rückschlagventil 38 angeordnet, das in Vorlaufrichtung durchströmbar ist. In der Verbindungsleitung 22 kann ein Rückschlagventil 40 angeordnet sein, das in Richtung von dem Rücklauf 18 zu dem Heizgerät 10 durchströmbar ist. Mit 5 ist ein Ventil im dritten Teil 30 des Vorlaufs 16 bezeichnet, mit welchem der Wärmeträgerfluß zu dem Heizungswärmetauscher 6 ganz geöffnet, teilweise geöffnet oder geschlossen werden kann. Die eingezeichneten Pfeile deuten die Strömungsrichtung des Wärmeträgers in den einzelnen Leitungen des Wärmeträgerkreislaufs 12 an.

An der Abzweigungsstelle 34, wo die Verbindungsleitung 22 von dem Rücklauf 18 abzweigt, ist ein thermostatisches Dreiwegeventil 42, wie es von der Heizungstechnik her an sich bekannt ist, eingebaut. Das Ventil 42 ermöglicht eine erste Stellung, in der der Wärmeträger aus dem ersten Teil 32 des Rücklaufs 18 vollständig in die Verbindungsleitung 22 strömt, eine zweite Stellung, in der der Wärmeträger aus dem ersten Teil 32 des Rücklaufs 18 vollständig in den zweiten Teil 36 des Rücklaufs 18 strömt, und Zwischenstellungen, in denen der Wärmeträger aus dem ersten Teil 32 des Rücklaufs 18 in beliebigen Anteil auf die Verbindungsleitung 22 und auf den zweiten Teil 36 des Rücklaufs 18 aufgeteilt wird.

Die Stellungen des Ventils 42 werden durch einen elektrothermischen, einen elektromotorischen Antrieb, einen Magnet oder ein Dehnstoffelement 44 bewirkt. Das Ventil 42 wird mit einem Temperaturfühler 46 gesteuert, der im ersten Teil 24 des Vorlaufs 16 nahe dem Verbrennungsmotor 2 sitzt. Mit 48 ist eine Steuer- bzw. Regellogik bezeichnet, die das Ventil 42 nach Maßgabe des Temperaturfühlers 46, ggf. mit Sollwertvergleich, steuert.

Das Heizgerät 10 ist mit einer nicht gesondert eingezeichneten und bezeichneten Steuerung ausgestattet.

Der Wärmeträgerkreislauf 12 und die darin beinhalteten Bauteile arbeiten wie folgt:
Wenn der Verbrennungsmotor 2 nach einer Fahrt des Fahrzeugs abgestellt wird, befindet sich der Wärmeträger im Wärmeträgerkreislauf 12 üblicherweise in einem Temperaturbereich von etwa 80 bis 100 °C, wobei der Vorlauf 16 etwas wärmer als der Rücklauf 18 ist. Dies gilt unabhängig davon, ob bei der Fahrt das Heizgerät 10, z.B. bei strenger Kälte, in Betrieb war oder nicht. Bei Nichtbetrieb des Heizgeräts 10 kann der Parallelast 20 relativ kalt sein, weil wenig oder kein Wärmeträger durch den Parallelast 20 geströmt ist, sondern durch den zweiten Teil 28 des Vorlaufs 16. Bei Abstellen des Verbrennungsmotors 2 schaltet sich das Heizgerät 10 selbsttätig ein, sofern sein Hauptschalter eingeschaltet ist. Solange die Temperatur des Wärmeträgers, erfaßt durch den Temperaturfühler 46, oberhalb einer zweiten Schwellentemperatur, die beispielsweise im Bereich 60 bis 80 °C, vorzugsweise 65 bis 75 °C liegt, ist ist beim Heizgerät 10 nur eine integrierte Wärmeträger-Umwälzpumpe eingeschaltet, nicht jedoch der Brenner zur Wärmeerzeugung; außerdem befindet sich in dieser Phase das Ventil 42 in seiner ersten Stellung, in der der Wärmeträger aus dem ersten Teil 32 des Rücklaufs 18 ausschließlich in die Verbindungsleitung 22 strömt. Somit ist ein Teilkreislauf des Wärmeträgers gebildet, der im wesentlichen einen hinteren Teil des Parallelasts 20 mit dem Heizgerät 10, den dritten Teil des Vorlaufs 16, den Heizungswärmetauscher 6, den ersten Teil 32 des Rücklaufs 18 und die Verbindungsleitung 22 umfaßt. Somit wird die Wärmemenge, die in dem Wärmeträger innerhalb dieses Teilkreislaufs steckt, zur Beheizung des Fahrzeuginnenraums genutzt.

Bei Unterschreiten der zweiten Schwellentemperatur schaltet sich das Heizgerät 10 vollständig ein, so daß dort Wärme für den Teilkreislauf erzeugt wird. Ein üblicher Temperaturbereich für diesen Heizbetrieb ist 70 bis 85 °C im dritten Teil 30 des Vorlaufs 16. Während der bisher beschriebenen Betriebsphasen kühlt der Wärmeträger im restlichen Teil des Wärmeträgerkreislaufs 12, im wesentlichen bestehend aus dem zweiten Teil 36 des Rücklaufs 18, dem Verbrennungsmotor 2, dem ersten Teil 24 des Vorlaufs 16, dem zweiten Teil 28 des Vorlaufs 16 und einem vorderen Teil des Parallelasts, allmählich ab.

Wenn die Temperatur des Wärmeträgers, erfaßt durch den Temperaturfühler 46 im ersten Teil 24 des Vorlaufs 16 unterhalb einer ersten Schwellentemperatur, die beispielsweise in der Gegend von 20 °C liegt, absinkt, wird das Ventil 42 in Richtung auf seine zweite Stellung umgesteuert, so daß ein Teil des auch nach dem Heizungswärmetauscher 6 noch recht warmen Wärmeträgers aus dem ersten Teil 32 des Rücklaufs 18 über den zweiten Teil 28 des Rücklaufs 18 zum Verbrennungsmotor 2 und von dort weiter strömt. Infolgedessen wird dem Verbrennungsmotor 2 Wärme zugeführt. Die Steuerung des Ventils 42 erfolgt so, daß durch kontinuierliches Umstellen des Ventils 42 in beiden Richtungen oder durch Hin- und Herschalten des Ventils 42 zwischen der ersten und der zweiten Stellung eine Temperatur des Wärmeträgers am Austritt des Verbrennungsmotors 2 von etwa 20 °C beibehalten wird. Es wird also nur soviel Wärmeträger zur Warmhaltung des Verbrennungsmotors 2 abgezweigt, wie für die Erhaltung der genannten Temperatur erforderlich ist, während der - normalerweise größere - Teil der erzeugten Wärme im beschriebenen Teilkreislauf bleibt.

Das Gebläse 8 des Heizungswärmetauschers 6 ist mit einer nicht eingezeichneten Steuerung gekoppelt, die das Gebläse 8 ein- und ausschaltet zur Einhaltung einer im wesentlichen konstanten Temperatur des Fahrzeuginnenraums. Diese Fahrzeuginnenraumtemperatur ist einstellbar.

Die besonders wichtige, zuletzt beschriebene Betriebsart mit Haltung der Temperatur des Verbrennungsmotors 2 auf etwa 20 °C kann man insbesondere auch dann wählen, wenn der Verbrennungsmotor 2 nicht nach vorhergehender Fahrt abgestellt wird, sondern die bevorzugte Erwärmung des Fahrzeuginnenraums gewünscht wird. Typische Beispiele sind die Vorwärmung des Fahrzeugs vor dem Losfahren nach einer kalten Nacht, der längere Aufenthalt einer Person im Fahrzeug bei abgestelltem Verbrennungsmotor und die Unterstützung der Heizleistung des noch relativ kalten Verbrennungsmotors nach dem Losfahren.

Das Heizgerät 10 kann ferner mit einer einstellbaren Zeitschaltuhr 52 ausgestattet sein, an die auch das Ventil 42 angeschlossen ist. Die Zeitschaltuhr 52 kann so ausgebildet sein, daß sie nicht nur das Einschalten des Heizgeräts 10 steuert, sondern, vorzugsweise mit zeitlichem Abstand zum Einschalten des Heizgeräts 10, auch die Umsteuerung des Ventils 42. Ein typisches Beispiel ist die ausschließliche Beheizung der Fahrerkabine eines Lastkraftwagens während der Nacht, wenn der oder die Fahrer eine Schlafpause einlegen, und Zuschalten der Motorvorwärmung zu einer bestimmten Zeit, beispielsweise eine Stunde, vor der geplanten Abfahrt des Lastkraftwagens. Ein weiteres Beispiel ist die Vorwärmung eines Personenkraftwagens nach kalter Nacht. In einer ersten Zeitphase wird die gesamte Wärmeträgerströmung vom Heizungswärmetauscher 6 durch den Verbrennungsmotor 2 geführt, um diesen wegen seiner relativ großen Masse rasch genug aufzuheizen. In einer zweiten Zeitphase wird das Wärmeangebot des Wärmeträgers entsprechend der weiter vorn genauer beschriebenen Betriebsart stärker auf den Heizungswärmetauscher 6 konzentriert und der Verbrennungsmotor 2 auf etwa 20 °C gehalten, so daß die Scheiben des Fahrzeuginnenraums sicher enteist werden.

Es wird darauf hingewiesen, daß das Ventil 42 alternativ an der Verbindungsstelle zwischen der Verbindungsleitung 22 und dem Parallelast 20 des Vorlaufs 16 oder an der Abzweigungsstelle 26 des Parallelasts 20 sitzen kann. An den beschriebenen Funktionen ändert sich nichts, weil in allen genannten Fällen das Ventil 42 steuert, in welchem Verhältnis das Heizgerät 10 Wärmeträger über die Verbindungsleitung 22 aus dem Rücklauf 18 und/oder aus dem Verbrennungsmotor 2 ansaugt. Bei den beiden letztgenannten Fällen ist das Rückschlagventil 40 entbehrlich.

Das beschriebene Ventil 42 ist ein Drei/Zwei-Wegeventil, also ein Ventil mit drei Anschlüssen und zwei Extremstellungen. Das Regelverhalten des Ventils 42 ist vorzugsweise proportional. Es wird darauf hingewiesen, daß statt des beschriebenen Dreiwegeventils 42 ein einfacheres Ein-Aus-Ventil mit Zwischenstellungen beispielsweise im zweiten Teil 36 des Rücklaufs 18, in der Verbindungsleitung 22 oder im vorderen Teil des Parallelasts 20 vorgesehen sein kann. Mit einem derartigen Ventil kann man ebenfalls steuern, daß das Heizgerät 10 mehr oder weniger Wärmeträger über die Verbindungsleitung 22 direkt aus dem Rücklauf 18 ansaugt und entsprechend weniger oder mehr Wärmeträger aus dem ersten Teil 24 des Vorlaufs 16.

Der Verbrennungsmotor 2 ist in üblicher Weise mit einer Wasserpumpe 50 ausgestattet. Ferner gibt es in üblicher Weise zwei Verbindungsleitungen zwischen dem Verbrennungsmotor 2 und seinem Kühler 4.

Generell gesprochen ist das Ventil 42 vorzugsweise ein temperaturabhängig und/oder zeitabhängig gesteuertes Ventil, insbesondere Drei/Zwei-Wegeventil.

**Patentansprüche**

1. Wärmeträgerkreislauf (12) für eine Fahrzeugheizung mit einem motorunabhängigen Heizgerät (10), mit:

   a) einem Vorlauf (16), der von einem Antriebs-Verbrennungsmotor (2) des Fahrzeugs zu einem Heizungswärmetauscher (6) für den Fahrzeuginnenraum führt und einen Parallelast (20) aufweist, in dem das Heizgerät (10) angeordnet ist;
   b) einem Rücklauf (18), der von dem Heizungswärmetauscher (6) zu dem verbrennungsmotor (2) führt;
   c) einer Verbindungsleitung (22), die von dem Rücklauf (18) zu einer Stelle des Vorlaufs (16) vor dem Heizgerät (10) führt; und
   d) einem temperaturabhängigen Ventil (42), das den Wärmeträgerfluß durch die Verbindungsleitung (22) und durch den Verbrennungsmotor (2) steuert,
   dadurch gekennzeichnet,
   daß das Ventil (42) durch die Temperatur des Wärmeträgers im Bereich des Verbrennungsmotors (2) gesteuert ist.

2. Wärmeträgerkreislauf nach Anspruch 1, dadurch gekennzeichnet, daß das Ventil (42) ein Dreiwegeventil ist, das an der Verbindungsstelle zwischen dem Rücklauf (18) und der Verbindungsleitung (22) sitzt.

3. Wärmeträgerkreislauf nach Anspruch 1, dadurch gekennzeichnet, daß das Ventil (42) ein Dreiwegeventil ist, das an der Verbindungsstelle zwischen der Verbindungsleitung (22) und dem Parallelast (20) des Vorlaufs (16) oder dem Teil (24) des Vorlaufes (16) vor der Abzweigung (26) des Parallelastes (20) sitzt.

4. Wärmeträgerkreislauf nach Anspruch 1, 2 oder 3, dadurch gekennzeichnet, daß das Ventil (42) von einem Temperaturfühler (46) gesteuert ist, der im Vorlauf (16) des Wärmeträgerkreislaufs (12) vor der Abzweigung (26) des Parallelasts (20) oder im Rücklauf (18) des Wärmeträgerkreislaufs (12) hinter der Abzweigung der Verbindungsleitung (22) vorgesehen ist, vorzugsweise nahe dem Verbrennungsmotor (2).

5. Wärmeträgerkreislauf nach einem der Ansprüche 1 bis 4, dadurch gekennzeichnet, daß das Ventil (42) derart gesteuert ist, daß der Wärmeträger im Bereich des Verbrennungsmotors (2) eine Temperatur von 10 bis 30°C, vorzugsweise 15 bis 25°C hat.

6. Wärmeträgerkreislauf nach einem der Ansprüche 1 bis 5, dadurch gekennzeichnet, daß das Venitl (42) durch eine einstellbare Schaltuhr (52) gesteuert ist.

7. Wärmeträgerkreislauf nach einem der Ansprüche 1 bis 6, dadurch gekennzeichnet, daß das Ventil (42) Zwischenstellungen aufweist, in denen die Wärmeträger-Durchflußmengen zwischen der Verbindungsleitung (22) und dem Verbrennungsmotor (2) aufgeteilt werden.

8. Wärmeträgerkreislauf nach eine der Ansprüche 1 bis 7, dadurch gekennzeichnet, daß das Ventil (42) als ein einfaches Ein-Aus-Ventil mit Zwischenstellungen im zweiten Teil (36) des Rücklaufes (18), in der Verbindungsleitung (22) oder im vorderen Teil des Parallelastes (20) angeordnet ist.

**Claims**

1. Heat transfer circuit (12) for a vehicle heating system with a heater (10) which is independent of the engine, having:
   a) a flow pipe (16) which leads from a drive internal combustion engine (2) of the vehicle to a heating system heat exchanger (6) for the vehicle interior and has a parallel branch (20) in which the heater (10) is arranged;
   b) a return pipe (18) which leads from the heating system heat exchanger (6) to the internal combustion engine (2);
   c) a connection line (22) which leads from the return pipe (18) to a point on the flow pipe (16) located before the heater (10); and
   d) a temperature-dependent valve (42) which controls the heat transfer flow through the connection line (22) and through the internal combustion engine (2),
   characterized in that the valve (42) is controlled by the temperature of the heat transfer medium in the region of the internal combustion engine (2).

2. Heat transfer circuit according to Claim 1, characterized in that the valve (42) is a three-way valve which is seated at the connection point between the return pipe (18) and the connection line (22).

3. Heat transfer circuit according to Claim 1, characterized in that the valve (42) is a three-way valve which is seated at the connection point between the connection line (22) and the parallel branch (20) of the flow pipe (16) or of the part (24) of the flow pipe (16) located before the branching point (26) of the parallel branch (20).

4. Heat transfer circuit according to Claim 1, 2 or 3, characterized in that the valve (42) is controlled by a temperature sensor (46) which is provided in the flow pipe (16) of the heat transfer circuit (12) before the branching point (26) of the parallel branch (20) or in the return pipe (18) of the heat transfer circuit (12) after the branching point of the connection line (22), preferably near the internal combustion engine (2).

5. Heat transfer circuit according to one of Claims 1 to 4, characterized in that the valve (42) is controlled such that the heat transfer medium has a temperature of 10 to 30 °C, preferably 15 to 25 °C, in the region of the internal combustion engine (2).

6. Heat transfer circuit according to one of Claims 1 to 5, characterized in that the valve (42) is controlled by an adjustable timer switch (52).

7. Heat transfer circuit according to one of Claims 1 to 6, characterized in that the valve (42) has intermediate positions in which the throughflow quantities of heat transfer medium are distributed between the connection line (22) and the internal combustion engine (2).

8. Heat transfer circuit according to one of Claims 1 to 7, characterized in that the valve (42) is arranged, as a simple on/off valve with intermediate positions, in the second part (36) of the return pipe (18), in the connection line (22) or in the front part of the parallel branch (20).

**Revendications**

1. Circuit d'agent caloporteur (12) pour un système de chauffage de véhicule comprenant un appareil de chauffage (10) indépendant du moteur, avec:

a) un tronçon aller (16), que mène d'un moteur d'entraînement à combustion interne (2) du véhicule à un échangeur de chaleur de chauffage (6) pour l'habitacle du véhicule, et qui présente une branche parallèle (20) dans laquelle est disposée l'appareil de chauffage (10);

b) un tronçon de retour (18), qui mène de l'échangeur de chaleur de chauffage (6) au moteur à combustion interne (2);

c) une conduite de jonction (22) qui mène du tronçon de retour (18) à un endroit du tronçon aller (16) situé avant l'appareil de chauffage (10); et

d) un distributeur (42) fonctionnant en fonction de la température, que commande l'écoulement d'agent caloporteur à travers la conduite de jonction (22) et à traverse le moteur à combustion interne (2),

caractérisé en ce que le distributeur (42) est commandé par la température de l'agent caloporteur dan la région du moteur à combustion interne (2).

2. Circuit d'agent caloporteur selon la revendication 1, caractérisé en ce que le distributeur (42) est un distributeur à trois voies, qui est monté au point de jonction entre le tronçon de retour (18) et la conduite de jonction (22).

3. Circuit d'agent caloporteur selon la revendication 1, caractérise en ce que le distributeur (42) est un distributeur à trois voies, que est monté au point de jonction entre la conduite de jonction (22) et la branche parallèle (20) du tronçon aller (16) ou la partie (24) du tronçon aller (16) située avant le départ en bifurcation (26) de la branche parallèle (20).

4. Circuit d'agent caloporteur selon la revendication 1, 2 ou 3, caractérisé en ce que le distributeur (42) est commandé par un capteur de température (46) qui est prévu dans le tronçon aller (16) du circuit d'agent caloporteur (12) avant le départ en bifurcation (26) de la branche parallèle (20), ou dans le tronçon de retour (18) du circuit d'agent caloporteur (12) après le départ en bifurcation de la conduite de jonction (22), de préférence à proximité du moteur à combustion interne (2).

5. Circuit d'agent caloporteur selon l'une des revendications 1 à 4, caractérisé en ce que le distributeur (42) est commandé de telle sorte que l'agent caloporteur possède dans la région du moteur à combustion interne (2) une température de 10 à 30 °C, de préférence de 15 à 25 °C.

6. Circuit d'agent caloporteur selon l'une des revendications 1 à 5, caractérise en ce que le distributeur (42) est commande par un commutateur à temps (52) réglable.

7. Circuit d'agent caloporteur selon l'une des revendications 1 à 6, caractérisé en ce que le distributeur (42) présente des positions intermédiaires dans lesquelles les débits de passage d'agent caloporteur sont répartis entre la conduite de jonction (22) et le moteur à combustion interne (2).

8. Circuit d'agent caloporteur selon l'une des revendications 1 à 7, caractérisé en ce que le distributeur (42) est disposé sous la forme d'un simple clapet ouvert/fermé avec des positions intermédiaires, dans la seconde partie (36) du tronçon de retour (18), dans la conduite de jonction (22) ou dans la partie avant de la branche parallèle (20).